# FASCICULE DE BREVET EUROPEEN

(11) **EP 3 224 653 B1**
(45) Date de publication et mention de la délivrance du brevet: **24.06.2020**
(21) Numéro de dépôt: 14824506.1
(22) Date de dépôt: 28.11.2014
(51) Int. Cl.: G01V 1/40, G01V 1/48

(54) **MÉTHODE ET DISPOSITIF DE TRAITEMENT DE DONNÉES DE PUITS**
VERFAHREN UND VORRICHTUNG ZUR VERARBEITUNG VON BOHRLOCHDATEN
METHOD AND DEVICE FOR PROCESSING WELL DATA

(43) Date de publication de la demande: 04.10.2017
(73) Titulaire: Total SA, 92400 Courbevoie (FR)
(72) Inventeur: MASSONNAT, Gérard, F-64320 Idron (FR)
(74) Mandataire: Plasseraud IP
(86) Numéro de dépôt international: PCT/FR2014/053086
(87) Numéro de publication internationale: WO 2016/083676

(56) Documents cités:
- EP-A1- 2 270 548
- FR-A1- 2 994 314
- J. L. BALDWIN: "Using a Simulated Bidirectional Associative Neural Network Memory With Incomplete Prototype Memories To Identify Facies From Intermittent Logging Data Acquired in a Siliciclastic Depositional Sequence: A Case Study", SPE ANNUAL TECHNICAL CONFERENCE AND EXHIBITION 1991, 9 octobre 1991 (1991-10-09), pages 273-286, XP055198576, DOI: 10.2118/22843-MS
- LERAT O ET AL: "Construction of a stochastic geological model constrained by high-resolution 3D seismic data - Application to the Girassol field, offshore Angola", SPE ANNUAL TECHNICAL CONFERENCE AND EXHIBITION, XX, XX, vol. 4, no. 110422, 11 novembre 2007 (2007-11-11), pages 2789-2804, XP002500514, DOI: 10.2118/110422-MS

## Description

La présente invention concerne le domaine du traitement des données de puits, notamment pour permettre la comparaison simplifiée de données de puits et/ou pour compléter les données de puits dont certaines parties sont manquantes ou inconnues.

Lors de forages, il est possible de déterminer des données de puits notamment à partir des carottes effectuées pour ce puits. Ces données de puits peuvent être représentées par un empilement vertical de strates représentatives de faciès.

Néanmoins, ces données étant des données discrètes, il peut être complexe de les comparer.

Le document : "Using a Simulated Bidirectional Associative Neural Network Memory With Incomplete Prototype Memories To Identify Faciès From Intermittent Logging Data Acquired in a Siliciclastic Depositional Sequence: A Case Study", J. L. BALDWIN,SPE ANNUAL TECHNICAL CONFERENCE AND EXHIBITION, pages 273-286 (1991), divulgue un procédé pour déterminer de faciès correspondant aux valeurs de données diagraphique, à l'aide d'un réseau neuronal. Le document: "Construction of a stochastic geological model constrained by high-resolution 3D seismic data - Application to the Girassol field, offshore Angola", O. Lerat et al., SPE ANNUAL TECHNICAL CONFERENCE AND EXHIBITION, vol. 4, no.110422, pages 2789-2804 (2007), divulgue un procédé de construction d'un modèle géo-statistique de faciès, à l'aide de courbes verticales des proportions des faciès obtenues des données de puits.

De plus, lors de la restauration des données de puits (ex. rétablissement d'un temps géologique de sédimentation dans les données de puits comme, par exemple, décrit dans la demande de brevet FR1257648), certaines parties des données de puits peuvent être inconnues (notamment du fait de la présence de failles, du fait de la survenance d'érosions, etc.).

La complétion de ces zones inconnues peut être difficile par les géologues sans assistance.

Il y a ainsi un besoin pour simplifier la comparaison de données de puits et aider les géologues afin de compléter les parties inconnues des données de puits.

La présente invention vient améliorer la situation.

A cet effet, la présente invention propose une méthode de traitement de données de puits participant à la résolution de ces objectifs.

La présente invention vise alors un procédé de traitement de données de puits issues d'un puits dans un sous-sol géologique, les données de puits comprenant, pour chaque cote courante parmi une pluralité de cotes, une association entre ladite cote courante et un faciès parmi une pluralité de faciès.

Le procédé comporte :
- réception des données de puits ;
- réception, pour chaque facies courant de la pluralité de faciès, d'une distribution de probabilité de présence dudit facies courant, en fonction d'un paramètre influant sur la sédimentation ;
- pour chaque cote courante de la pluralité de cotes, et dans un espace comprenant au moins un premier axe et un deuxième axe :
   - détermination d'au moins un point dans ledit espace, ledit au moins un point ayant comme coordonnée selon le premier axe ladite cote courante et comme coordonnée selon le deuxième axe une coordonnée fonction de la distribution de probabilité de présence du facies associé à ladite cote courante dans lesdites données de puits reçues ;
- détermination d'une courbe dans ledit espace en fonction dudit au moins un point pour chaque cote de la pluralité de cotes.

Par exemple, la coordonnée selon le deuxième axe peut être une coordonnée pour laquelle la distribution de probabilité est non-nulle.

Dans un mode de réalisation, le paramètre influant sur la sédimentation peut être un paramètre dans un groupe comprenant une distance au puits, une énergie de sédimentation, une profondeur d'eau lors de la sédimentation.

L'énergie de sédimentation peut par exemple être liée à la vitesse de l'eau d'une rivière, d'un niveau de turbulence, etc.

Ce paramètre peut également être liée à la composition chimique du milieu de sédimentation (ex. la concentration en sels pouvant influer sur la sédimentation de certaines roches/faciès).

En outre, le au moins un point déterminé peut être associé à un poids, ledit poids étant fonction de la distribution de probabilité de présence du facies associé à ladite cote courante dans lesdites données de puits reçues. La détermination de ladite courbe peut alors être fonction dudit au moins un poids associés audit au moins un point.

Avantageusement, la détermination de ladite courbe peut comporter une régression polynomiale ou une régression linéaire ou une régression multilinéaire ou une méthode de Savitzky-Golay.

Dans un mode de réalisation particulier de l'invention, la détermination de ladite courbe peut comporter la minimisation d'une distance, ladite distance minimisée comprenant une opération dans un groupe comprenant :
- une somme de distances entre la courbe déterminée et le au moins un point déterminé ;
- une somme de carrés de distances entre la courbe déterminée et le au moins un point déterminé ;
- une somme de distances à la puissance N entre la courbe déterminée et le au moins un point déterminé, N étant un entier supérieur ou égal à 3 ;

En outre, la détermination de ladite courbe peut comporter la minimisation d'une distance, ladite distance minimisée comprenant une opération dans un groupe comprenant :
- une somme pondérée de distances entre la courbe déterminée et le au moins un point déterminé, la pondération étant fonction des poids associés aux points déterminés.
- une somme pondérée de carrés de distances entre la courbe déterminée et le au moins un point déterminé, la pondération étant fonction des poids associés aux points déterminés.
- une somme pondérée de distances à la puissance N entre la courbe déterminée et le au moins un point déterminé, N étant un entier supérieur ou égal à 3, la pondération étant fonction des poids associés aux points déterminés.

Avantageusement, le procédé peut comporter en outre :
- pour au moins une cote courante, normalisation des poids des points ayant comme coordonnée selon le premier axe ladite cote courante.

Dans un mode particulier de réalisation, le procédé peut comporter en outre :
- détermination d'un faciès associé à une cote donnée, ladite détermination étant fonction de la valeur de la courbe déterminée pour ladite cote donnée, et des distributions de probabilité reçues.

Ainsi, la présente invention vise également un dispositif de traitement de données de puits issues d'un puits dans un sous-sol géologique, les données de puits comprenant, pour chaque cote courante parmi une pluralité de cotes, une association entre ladite cote courante et un faciès parmi une pluralité de faciès. Le dispositif comporte :
- une interface pour la réception des données de puits ;
- une interface pour la réception, pour chaque facies courant de la pluralité de faciès, d'une distribution de probabilité de présence dudit facies courant, en fonction d'un paramètre influant sur la sédimentation ;
- pour chaque cote courante de la pluralité de cotes, et dans un espace comprenant au moins un premier axe et un deuxième axe :
   - une circuit pour la détermination d'au moins un point dans ledit espace, ledit au moins un point ayant comme coordonnée selon le premier axe ladite cote courante et comme coordonnée selon le deuxième axe une coordonnée fonction de la distribution de probabilité de présence du facies associé à ladite cote courante dans lesdites données de puits reçues ;
- un circuit pour la détermination d'une courbe dans ledit espace en fonction dudit au moins un point pour chaque cote de la pluralité de cotes.

Un programme informatique, mettant en œuvre tout ou partie du procédé décrit ci-avant, installé sur un équipement préexistant, est en lui-même avantageux, dès lors qu'il permet le traitement des données de puits.

Ainsi, la présente invention vise également un programme informatique comportant des instructions pour la mise en œuvre du procédé précédemment décrit, lorsque ce programme est exécuté par un processeur.

Ce programme peut utiliser n'importe quel langage de programmation (par exemple, un langage objet ou autre), et être sous la forme d'un code source interprétable, d'un code partiellement compilé ou d'un code totalement compilé.

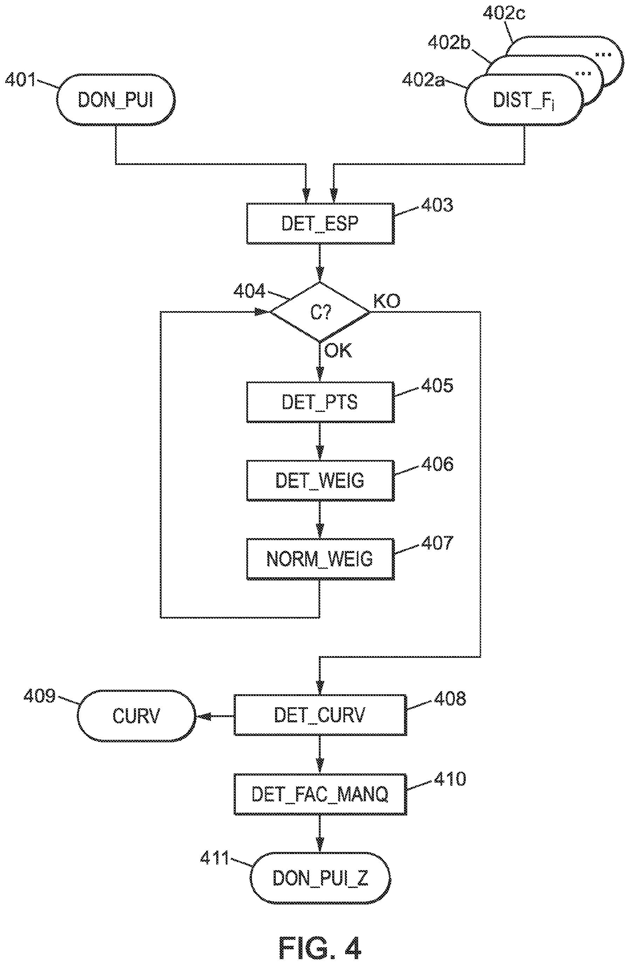

La figure 4 décrite en détails ci-après, peut former l'organigramme de l'algorithme général d'un tel programme informatique.

D'autres caractéristiques et avantages de l'invention apparaîtront encore à la lecture de la description qui va suivre. Celle-ci est purement illustrative et doit être lue en regard des dessins annexés sur lesquels :
- la figure 1 illustre une illustration d'une réalisation particulière de l'invention ;
- la figure 2 illustre une pondération de point en fonction de la distribution du faciès considéré dans un mode de réalisation selon l'invention ;
- la figure 3 illustre une minimisation de la distance de la courbe aux points déterminés pour une cote donnée dans un mode de réalisation selon l'invention ;
- la figure 4 illustre un ordinogramme d'un mode de réalisation de l'invention ;
- la figure 5 représente un exemple de dispositif traitement de données de puits dans un mode de réalisation de l'invention ;
- la figure 6 illustre la comparaison de deux courbes déterminées à l'aide d'un mode de réalisation de l'invention.

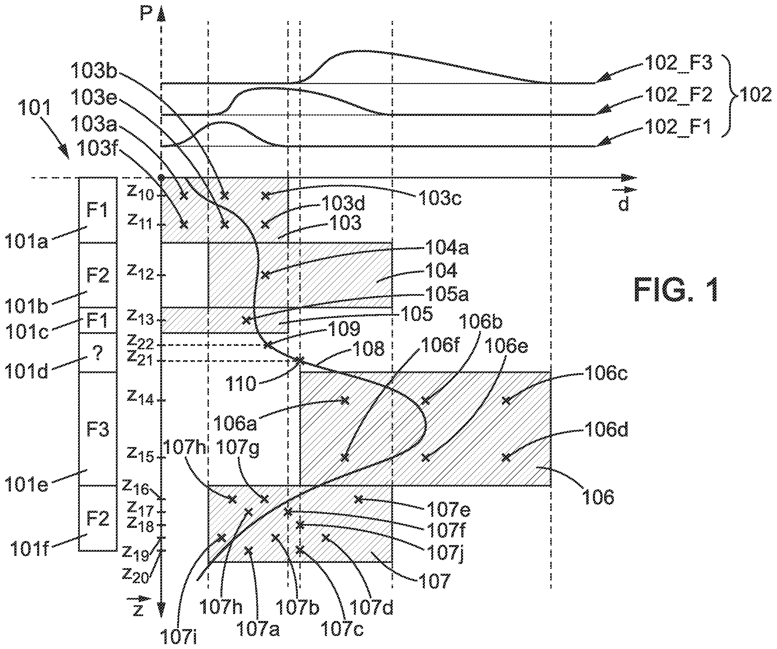

La figure 1 illustre une illustration d'une réalisation particulière de l'invention.

Pour la mise en œuvre de l'invention, il est utile d'avoir reçu des données de puits issues d'un puits de forage d'un sous-sol géologique, par exemple. Ces données de puits 101 peuvent être représentées sous la forme d'une succession de faciès (ex. faciès n°1 ou F1 pour le bloc 101a, faciès n°2 ou F2 pour le bloc 101b, F1 pour le bloc 101c, un faciès inconnu pour le bloc 101d, faciès n°3 ou F3 pour le bloc 101e, F2 pour le bloc 101f) répartis selon un axe vertical *̅z̅*̅. Cette succession de faciès représente les différentes strates de sédimentation dans le sous-sol géologique considéré.

Il est également utile de recevoir des informations concernant des distributions de probabilité 102 pour au moins une partie des faciès présents dans les données de puits. A titre d'illustration, la distribution de probabilité 102_F1 représente la distribution de probabilité du faciès F1, la distribution de probabilité 102_F2 représente la distribution de probabilité du faciès F2, et la distribution de probabilité 102_F3 représente la distribution de probabilité du faciès F3. Ces distributions de probabilité représente la probabilité de présence d'un faciès donnée en fonction d'un paramètre influant/contrôlant la sédimentation de ce faciès. Ce paramètre contrôlant la sédimentation peut être :
- une distance de sédimentation d'un faciès par rapport à une distance (par exemple, par rapport à la distance au puits ou à la distance par rapport à un point caractéristique du sous-sol géologique, comme une embouchure) ;
- une énergie de sédimentation d'un faciès (ex. liée aux turbulences d'un liquide, une vitesse d'un ancien fleuve, etc.) ;
- une profondeur d'eau influant sur la sédimentation d'un faciès ;
- une concentration en sel ou en un autre produit chimique / minéralogique / ionique ;
- etc.

Dans la figure 1, l'axe horizontal *̅d̅*̅ représente ce paramètre contrôlant la sédimentation.

Après la réception des données de puits 101 et des distributions associés à chaque faciès 102, il est possible de créer un espace défini par les deux axes *̅d̅*̅ et *̅z̅*̅. Cet espace est utile à la création de la courbe selon ce mode de réalisation de l'invention, comme il est indiqué ci-dessous.

Pour une cote *zᵢ* de l'axe *̅z̅*̅ (avec i un nombre entier dans l'intervalle [10-20] dans l'exemple de la figure 1), il est possible de suivre le processus suivant :
- identifier le faciès Fⱼ correspondant à cette cote *zᵢ* (avec j un nombre entier dans l'intervalle [1-3] dans l'exemple de la figure 1) : par exemple, la cote *z*₁₀, *z*₁₁, *z*₁₃ correspond au faciès F1, la cote *z*₁₂, *z*₁₆, *z*₁₇, *z*₁₈, *z*₁₉, *z*₂₀ correspond au faciès F2, la cote *z*₁₄, *z*₁₅ correspond au faciès F3.
- identifier la distribution de probabilité 102_Fⱼ correspondant au faciès Fⱼ : par exemple, la distribution de probabilité 102_F1 correspond au faciès F1, la distribution de probabilité 102_F2 correspond au faciès F2, la distribution de probabilité 102_F3 correspond au faciès F3,

Une fois le faciès Fⱼ et la distribution 102_Fⱼ identifié, il est possible de représenter une zone Zᵢⱼ dans l'espace précédemment défini, cette zone correspondant à l'ensemble des points de l'espace ayant une cote selon l'axe *̅z̅*̅ correspondant au faciès Fⱼ et ayant une coordonnée selon l'axe *̅d̅*̅ correspondant à une probabilité non nulle de la distribution 102_Fⱼ. A titre d'illustration :
- la zone 103 ou 105 correspond à une zone correspondant au faciès F1 pour laquelle la distribution de probabilité 102_F1 est non-nulle ;
- la zone 104 et 107 correspond à une zone correspondant au faciès F2 pour laquelle la distribution de probabilité 102_F2 est non-nulle ;
- la zone 106 correspond à une zone correspondant au faciès F3 pour laquelle la distribution de probabilité 102_F3 est non-nulle.

La détermination de ces zones n'est pas essentielle à l'invention mais permettent de visualiser graphiquement les zones dans laquelle des points peuvent être déterminés selon un des modes de réalisation de l'invention.

En effet, une fois le faciès Fⱼ et la distribution 102_Fⱼ identifiés, il est possible de déterminer pour la cote *zᵢ*, un ou plusieurs points à l'aide de la distribution. A titre d'illustration, il est possible de déterminer ces points comme suit, de manière alternative ou de manière cumulative :
- détermination d'un point ayant comme coordonnée selon l'axe *̅d̅*̅ la coordonnée correspondant à la plus forte probabilité de la distribution 102_Fⱼ (par exemple, le point 104a correspondant au maximum de la distribution 102_F2) ;
- détermination d'un point ayant comme coordonnée selon l'axe *̅d̅*̅ la coordonnée correspondant à un tirage aléatoire pour une variable aléatoire correspondant à la distribution 102_Fⱼ (par exemple, la coordonnée du point 105a a été tirée aléatoirement dans la distribution 102_F1) ;
- détermination de plusieurs points ayant comme coordonnée selon l'axe *̅d̅*̅ la coordonnée correspondant à un tirage aléatoire pour une variable aléatoire correspondant à la distribution 102_Fⱼ (par exemple, les points 107a à 107j correspondent à cette détermination avec la distribution 102_F2). Si un grand nombre de points sont déterminés, la concentration des points selon l'axe *̅d̅*̅ suit la loi de probabilité de cette distribution 102_Fⱼ ;
- détermination d'un nombre prédéterminé de points régulièrement répartis dans l'intervalle de coordonnées selon l'axe *̅d̅*̅ correspondant à une distribution 102_Fⱼ non nulle (par exemple, trois points 103a, 103b, 103c respectivement 103f, 103e, 103d sont déterminés pour la cote *z*₁₀ respectivement *z*₁₁, la distance entre ces points étant un quart de la longueur de la zone 103 ; dans un autre exemple, trois points 106a, 106b, 106c respectivement 106f, 106e, 106d sont déterminés pour la cote *z*₁₄ respectivement *z*₁₅, la distance entre ces points étant un quart de la longueur de la zone 106).

Une fois l'ensemble de ces points fixés, il est possible de déterminer une courbe 108 passant sensiblement par ces points. La détermination de la courbe peut être réalisée à l'aide d'une régression/approximation polynomiale, d'une régression/approximation linéaire, d'une régression/approximation multilinéaire ou encore d'une méthode de Savitzky-Golay. Ladite détermination peut également être réalisée à partir d'une combinaison de ces méthodes.

Une fois la courbe 108 déterminée, il est possible de compléter les données de puits si celle-ci sont parcellaires : par exemple, dans les données de puits 101, le bloc 101d n'est pas associé avec un faciès donné car ce faciès est inconnu.

Pour déterminer le faciès correspondant à une cote non associée à un faciès donné (par exemple, la cote *z*₂₁ et/ou la cote *z*₂₂), il est possible de suivre le processus suivant :
- déterminer la coordonnée selon l'axe *̅d̅*̅ d'un point de la courbe ayant ladite cote comme coordonnée selon l'axe *̅z̅*̅ (point 109 pour la cote *z*₂₂ et point 110 pour la cote *z*₂₁) ;
- appliquer l'une des méthodes de détermination suivantes pour le faciès :
   - déterminer le faciès correspondant à la distribution ayant la plus forte probabilité pour la coordonnée déterminée à l'étape précédente (le faciès F2 pour les points 109 et 110) ;
   - effectuer un tirage aléatoire parmi les faciès possibles, la probabilité du tirage d'un faciès donné correspondant à la valeur de la distribution de ce faciès et pour la coordonnée déterminée à l'étape précédente ;
- associer le faciès déterminé à ladite cote.

Bien entendu, ce processus peut aboutir au fait que la variabilité du faciès nouvellement associé est très importante dans les cotes initialement non associées à un faciès (notamment en cas de tirage aléatoire). Ainsi, optionnellement, il est possible de réassocier à plusieurs cotes successives le même faciès, ce faciès étant le plus fréquent dans un intervalle de cotes donné : par exemple si dans l'intervalle [z₃₀-Z₄₀], 7 cotes ont été associées au faciès F1 et que 4 cotes ont été associées au faciès F2, il est possible de réassocier aux cotes z₃₀ à z₄₀ le faciès F1 comme étant le plus courant dans cet intervalle. La largeur de l'intervalle considéré peut être déterminée arbitrairement (par exemple par un opérateur ayant une connaissance de la variabilité du faciès dans cette zone) ou en fonction de la largeur des blocs dans les données de puits (ex. moyenne de la largeur de l'ensemble des blocs dans les données de puits, moyenne de la largeur de blocs dans les données de puits et située dans une distance prédéterminée du bloc non associé à un faciès donné pour lequel la détermination est effectuée). Pour cette détermination de la largeur de l'intervalle, les blocs voisins de blocs non associés à un faciès peuvent être ignorés : en effet, leur largeur est sujette à caution, le bloc non-associé pouvant masquer leurs véritables bornes.

Il est également possible, pour déterminer le faciès à associer au bloc 101d, de supposer, successivement, que le bloc 101d est associé avec un faciès donné, de calculer la courbe 108 comme cela est détaillé précédemment: une fois chaque courbe calculée, il est possible de la comparer à la courbe initialement calculée sans prendre en compte le bloc 101d et de sélectionner pour le bloc 101d le faciès pour laquelle la courbe associée est la plus proche de la courbe initiale.

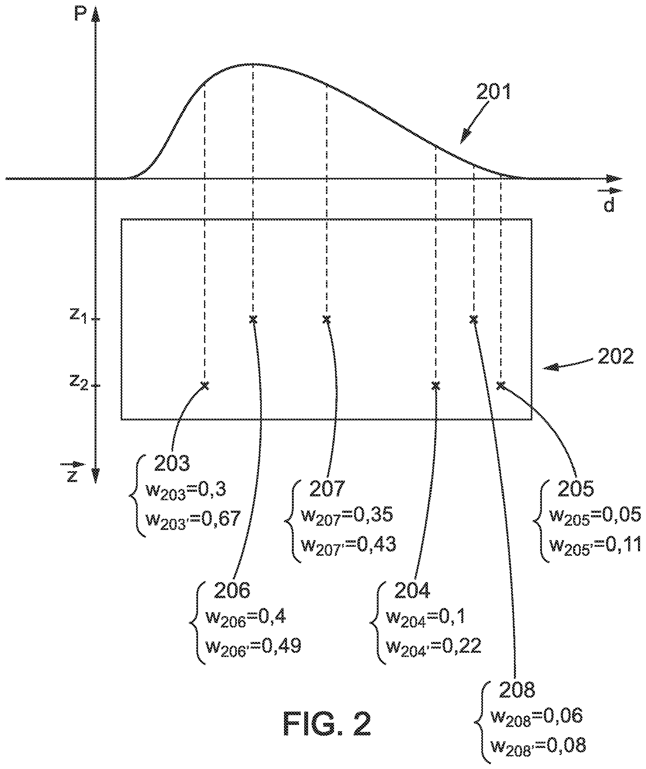

La figure 2 illustre une pondération de point en fonction de la distribution du faciès considéré dans un mode de réalisation selon l'invention.

En effet, il est également possible d'associer à chaque point déterminé (comme décrit précédemment, par exemple) un poids.

Le poids peut être fonction de la distribution de probabilité 201 du facies associé à ladite cote courante (z₁ ou z₂). Ainsi, la détermination de la courbe 108 peut également être fonction des poids associés à ces points.

Par exemple, pour la cote z₁, les trois points 206, 207, 208 peuvent être associés respectivement aux poids w₂₀₆=0,4, w₂₀₇=0,35, w₂₀₈=0,06 correspondant à la valeur de la distribution 201 pour la coordonnée selon l'axe *̅d̅*̅ correspondant aux points.

De plus, pour la cote z₂, les trois points 203, 204, 205 peuvent être associés respectivement aux poids w₂₀₃=0,3, w₂₀₄=0,1, w₂₀₅=0,05 correspondant à la valeur de la distribution 201 pour la coordonnée selon l'axe *̅d̅*̅ correspondant aux points.

Il est possible, afin de limiter ou d'éviter tout effet lié à une concentration de points excessive dans une zone particulière de l'espace, de normaliser les valeurs de poids.

Ainsi, les valeurs normalisées de poids w₂₀₃, w₂₀₄, w₂₀₅ peuvent être w₂₀₃'=0,67, w_{z04}'=0,22, w₂₀₅'=0,11 (ainsi, w₂₀₃' + w₂₀₃' + w₂₀₅'=1). Les valeurs normalisées de poids w₂₀₆, w₂₀₇, w₂₀₈ peuvent être w₂₀₆'=0,49, w₂₀₇'=0,43, w₂₀₈'=0,08 (ainsi, w₂₀₆' + w₂₀₇' + w₂₀₈'=1).

Ces poids (normalisés ou non) peuvent alors être utilisés dans la détermination de la courbe en donnant plus ou moins d'importance à certains points par rapport aux autres, notamment en pondérant le calcul du résidu lors de la minimisation de celui-ci lors de la détermination de la courbe.

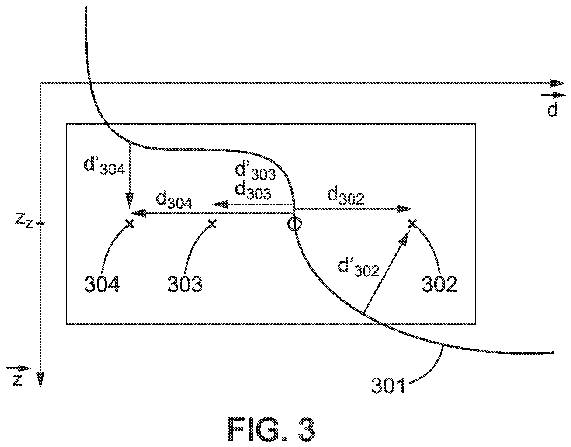

La figure 3 illustre une minimisation de la distance de la courbe aux points déterminés dans un mode de réalisation selon l'invention.

En effet, durant la détermination de la courbe optimale en fonction des points (pondérés ou non) déterminés, il est possible de calculer, pour une courbe donnée, un résidu comme étant fonction de la somme des distances de la courbe aux différents points.

La courbe qui peut alors être sélectionnée comme étant la courbe optimale est la courbe pour laquelle le résidu est le plus petit possible parmi toutes les courbes possibles. En fonction de la méthode de détermination de la courbe (optimale) choisie, la minimisation du résidu peut être réalisée analytiquement, itérativement (ex. amélioration local de la courbe), de manière stochastique ou encore en combinant une méthode itérative et une méthode stochastique (ex. méthode dite du « recuit simulé »).

La distance d'un point à une courbe peut se calculer selon différentes méthodes :
- distance du point à la courbe selon un axe privilégié (comme l'axe *̅d̅*̅). Dans l'exemple de la figure 3, les trois points 302, 303 et 304 étant utilisé pour le calcul par rapport à la courbe 301, le résidu est alors d₃₀₂+d₃₀₃+d₃₀₄.
- la plus petite distance du point à la courbe dans l'espace (*̅d̅*̅,*̅z̅*̅). Dans l'exemple de la figure 3, et dans les mêmes conditions que précédemment, le résidu est d₃₀₂'+d₃₀₃'+d₃₀₄'.

Si les points 302, 303, 304 sont pondérés respectivement par les poids w₃₀₂, w₃₀₃ et w₃₀₄, le résidu peut alors être w₃₀₂.d₃₀₂+ w₃₀₃.d₃₀₃+ w₃₀₄.d₃₀₄ ou w₃₀₂.d₃₀₂'+ w₃₀₃.d₃₀₃'+ w₃₀₄.d₃₀₄' selon la méthode choisie.

Par ailleurs, si le résidu est présenté comme étant une somme, elle peut être une somme de carrés de distances ou encore, plus généralement une somme de distances mises à la puissance N avec N un entier supérieur ou égal à 2. Ainsi, ce résidu peut être par exemple d₃₀₂^{N}+d₃₀₃^{N}+d₃₀₄^{N} ou w₃₀₂.d₃₀₂^{N} + w₃₀₃.d₃₀₃^{N} + w₃₀₄.d₃₀₄^{N} OU w₃₀₂.d₃₀₂^{,N} + w₃₀₃.d₃₀₃^{,N} + w₃₀₄.d₃₀₄^{,N}

La figure 4 illustre un ordinogramme d'un mode de réalisation de l'invention.

Sur réception des données de puits (401) et des distributions de probabilité de présence de faciès fonction d'un paramètre contrôlant la sédimentation pour chacun des faciès considérés (402a, 402b, 402c, etc.), il est possible de créer (étape 403) un espace défini par au moins deux axes : un premier axe selon l'axe des données de puits (le plus souvent cet axe est un axe vertical *̅z̅*̅ ou encore un axe « rendu vertical » suite à la projection sur l'axe vertical des données de puits) et un deuxième axe évoluant avec le paramètre contrôlant la sédimentation.

Il est alors possible d'identifier un ensemble de cotes pour lequel le procédé suivant est mis en œuvre : cet ensemble de cotes peut correspondre à la discrétisation de l'axe *̅z̅*̅ de manière uniforme (ex. une cote tous les mètres, etc.) ou encore à une sélection aléatoire de cotes sur l'axe *̅z̅*̅. Cet ensemble de cotes peut être également prédéterminé par un opérateur.

Si une cote n'a pas été utilisée pour le procédé décrit ci-dessous, cette cote est alors sélectionnée (test 404, sortie OK).

Pour la cote sélectionnée, un ou des points de l'espace peuvent alors déterminés comme cela est détaillé en lien avec la figure 1 (étape 405). Par ailleurs, et optionnellement, un poids peut également être déterminé pour chacun de ces points déterminés comme cela est expliqué en lien avec la figure 3 (étape 406). Ces poids peuvent optionnellement être normalisés afin que la somme de ces poids soit égale à 1 (étape 407) pour chacune des cotes.

Si toutes les cotes ont été utilisées pour la détermination de points comme décrit ci-avant (test 404, sortie KO), il est possible de déterminer la courbe comme cela est détaillé en lien avec la figure 1 (étape 408).

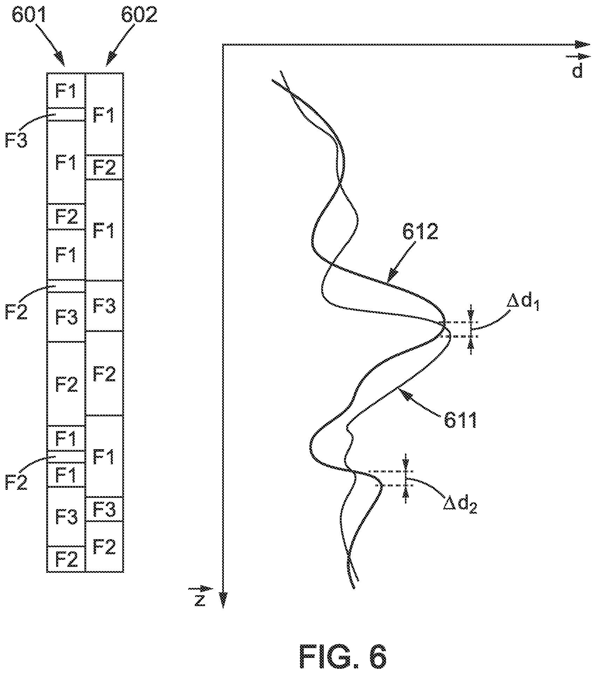

Cette courbe peut être fournie (409) à un utilisateur ou un autre processus afin de pouvoir l'utiliser, par exemple, afin de comparer les données de puits issues de deux puits différents. Une telle comparaison est détaillée en lien avec la figure 6.

Cette courbe peut également servir à compléter (étape 410) des données de puits parcellaires (i.e. certaines cotes ne sont pas associées à un faciès car ce dernier est inconnu) comme décrit en relation avec la figure 1. Ces données parcellaires sont le plus souvent liées à une restauration de puits (ex. rétablissement d'un temps géologique de sédimentation dans les données de puits comme par exemple décrit dans la demande de brevet FR1257648), certaines parties des données de puits peuvent être inconnues (notamment due à des failles, des érosions, etc.).

Une fois complétées, les données de puits (411) peuvent retournées pour d'autres traitements.

La figure 6 illustre la comparaison de deux courbes déterminées à l'aide d'un mode de réalisation de l'invention.

Lors de la réception de deux jeux de données de puits 601 et 602, il peut être complexe de les comparer. Sont-elles proches ? Existe-t-il un décalage vertical des données de puits ?

Une fois les courbes déterminées comme cela est décrit en relation avec la figure 1, il est plus aisée pour un utilisateur ou un programme informatique de les comparer. A titre d'illustration, les courbes 611 et 612 correspondent respectivement aux données de puits 601 et 602.

Dans l'exemple de la figure 6, et bien que les deux courbes 611 et 612 soit différentes, il est possible de constater visuellement un décalage vertical des deux courbes d'une valeur de Δ*d*₁ ou de Δ*d*₂ en fonction de l'endroit où est évalué ce décalage sur la courbe. Pour évaluer ce décalage, il est également possible de calculer la corrélation ou la courbe de corrélation de ces deux courbes de manière automatisée.

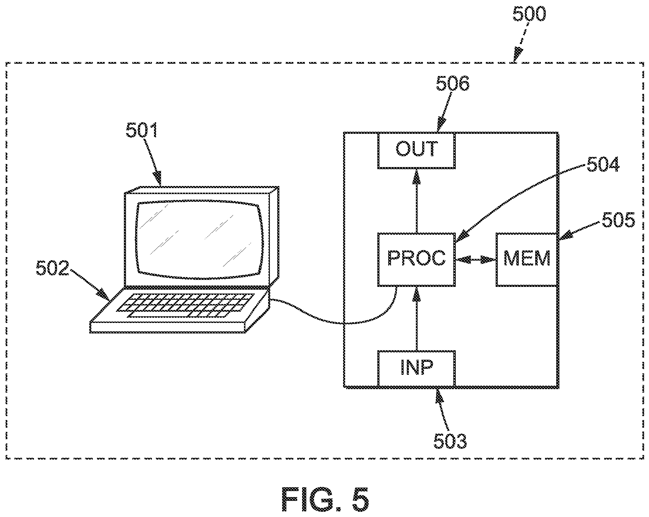

La figure 5 représente un exemple de dispositif traitement de données de puits dans un mode de réalisation de l'invention.

Dans ce mode de réalisation, le dispositif comporte un ordinateur 500, comprenant une mémoire 505 pour stocker des instructions permettant la mise en œuvre du procédé, les données de mesures reçues, et des données temporaires pour réaliser les différentes étapes du procédé tel que décrit précédemment.

L'ordinateur comporte en outre un circuit 504. Ce circuit peut être, par exemple :
- un processeur apte à interpréter des instructions sous la forme de programme informatique, ou
- une carte électronique dont les étapes du procédé de l'invention sont décrites dans le silicium, ou encore
- une puce électronique programmable comme une puce FPGA (pour « Field-Programmable Gate Array » en anglais).

Cet ordinateur comporte une interface d'entrée 503 pour la réception de données de puits et les distributions de faciès, et une interface de sortie 506 pour la fourniture des données de puits modifiées et/ou de la courbe calculée. Enfin, l'ordinateur peut comporter, pour permettre une interaction aisée avec un utilisateur, un écran 501 et un clavier 502. Bien entendu, le clavier est facultatif, notamment dans le cadre d'un ordinateur ayant la forme d'une tablette tactile, par exemple.

Par ailleurs, le schéma fonctionnel présenté sur la figure 4 est un exemple typique d'un programme dont certaines instructions peuvent être réalisées auprès du dispositif décrit. A ce titre, la figure 4 peut correspondre à l'organigramme de l'algorithme général d'un programme informatique au sens de l'invention.

Bien entendu, la présente invention, dont la portée est définie par les revendications, ne se limite pas aux formes de réalisation décrites ci-avant à titre d'exemples ; elle s'étend à d'autres variantes.

D'autres réalisations sont possibles.

Par exemple, la figure 1 représente une espace (*̅z̅*̅, *̅d̅*̅) orthogonal mais un espace non-orthogonal est également envisageable sans modification substantielle de la mise en œuvre.

## Revendications

1. Procédé, mis en œuvre par ordinateur, de traitement de données de puits issues d'un puits dans un sous-sol géologique, les données de puits comprenant, pour chaque cote courante parmi une pluralité de cotes, une association entre ladite cote courante et un faciès parmi une pluralité de faciès,
dans lequel le procédé comporte :
- réception (401) des données de puits (101);
**caractérisé en ce que** il comporte, en outre:
- réception (402a, 402b, 402c), pour chaque faciès (F1, F2, F3) courant de la pluralité de faciès, d'une distribution de probabilité (102_F1, 102_F2, 102_F3) de présence dudit faciès courant, en fonction d'un paramètre influant sur la sédimentation ;
- pour chaque cote courante (z₁₀-z₂₀) de la pluralité de cotes, et dans un espace comprenant au moins un premier axe et un deuxième axe :
- détermination (405) d'au moins un point (103a-103f, 104a, 105a, 106a-106f, 107a-107j) dans ledit espace, ledit au moins un point ayant comme coordonnée selon le premier axe ladite cote courante et comme coordonnée selon le deuxième axe une coordonnée fonction de la distribution de probabilité de présence du faciès associé à ladite cote courante dans lesdites données de puits reçues ;
- détermination (408) d'une courbe (108) dans ledit espace en fonction dudit au moins un point pour chaque cote de la pluralité de cotes.

2. Procédé selon la revendication 1, dans lequel le paramètre influant sur la sédimentation est un paramètre dans un groupe comprenant une distance au puits, une énergie de sédimentation, une profondeur d'eau lors de la sédimentation.

3. Procédé selon l'une des revendications précédentes, dans lequel le au moins un point déterminé (406) est associé à un poids (w₂₀₃-w₂₀₈), ledit poids étant fonction de la distribution de probabilité de présence du faciès associé à ladite cote courante dans lesdites données de puits reçues,
et dans lequel, la détermination de ladite courbe est fonction dudit au moins un poids associés audit au moins un point.

4. Procédé selon l'une des revendications précédentes, dans lequel la détermination de ladite courbe comporte une régression polynomiale ou une régression linéaire ou une régression multilinéaire ou une méthode de Savitzky-Golay.

5. Procédé selon l'une des revendications précédentes, dans lequel la détermination de ladite courbe comporte la minimisation d'une distance, ladite distance minimisée comprenant une opération dans un groupe comprenant :
- une somme de distances entre la courbe déterminée et le au moins un point déterminé ;
- une somme de carrés de distances entre la courbe déterminée et le au moins un point déterminé ;
- une somme de distances à la puissance N entre la courbe déterminée et le au moins un point déterminé, N étant un entier supérieur ou égal à 3 ;

6. Procédé selon la revendication 3, dans lequel la détermination de ladite courbe comporte la minimisation d'une distance, ladite distance minimisée comprenant une opération dans un groupe comprenant :
- une somme pondérée de distances entre la courbe déterminée et le au moins un point déterminé, la pondération étant fonction des poids associés aux points déterminés.
- une somme pondérée de carrés de distances entre la courbe déterminée et le au moins un point déterminé, la pondération étant fonction des poids associés aux points déterminés.
- une somme pondérée de distances à la puissance N entre la courbe déterminée et le au moins un point déterminé, N étant un entier supérieur ou égal à 3, la pondération étant fonction des poids associés aux points déterminés.

7. Procédé selon la revendication 3, dans lequel le au moins un point comporte une pluralité de points, le procédé comporte en outre :
- pour au moins une cote courante, normalisation (407) des poids des points de la pluralité de points ayant comme coordonnée selon le premier axe ladite cote courante.

8. Procédé selon l'une des revendications précédentes, dans lequel le procédé comporte en outre :
- détermination (410) d'un faciès associé à une cote donnée, ladite détermination étant fonction de la valeur de la courbe déterminée pour ladite cote donnée, et des distributions de probabilité reçues.

9. Dispositif de traitement de données de puits issues d'un puits dans un sous-sol géologique, les données de puits comprenant, pour chaque cote courante parmi une pluralité de cotes, une association entre ladite cote courante et un faciès parmi une pluralité de faciès,
dans lequel le dispositif (500) comporte :
- une interface (503) pour la réception des données de puits ;
**caractérisé en ce que** il comporte, en outre:
- une interface (503) pour la réception, pour chaque faciès courant de la pluralité de faciès, d'une distribution de probabilité de présence dudit faciès courant, en fonction d'un paramètre influant sur la sédimentation ;
- pour chaque cote courante de la pluralité de cotes, et dans un espace comprenant au moins un premier axe et un deuxième axe :
- un circuit (504) adapté pour la détermination d'au moins un point dans ledit espace, ledit au moins un point ayant comme coordonnée selon le premier axe ladite cote courante et comme coordonnée selon le deuxième axe une coordonnée fonction de la distribution de probabilité de présence du faciès associé à ladite cote courante dans lesdites données de puits reçues ;
- un circuit (504) adapté pour la détermination d'une courbe dans ledit espace en fonction dudit au moins un point pour chaque cote de la pluralité de cotes.

10. Produit programme informatique comportant des instructions pour la mise en œuvre du procédé selon l'une des revendications 1 à 8, lorsque ce programme est exécuté par un processeur.

## Patentansprüche

1. Von einem Computer durchgeführtes Verfahren zur Verarbeitung von Bohrlochdaten, die von einem Bohrloch in einem geologischen Untergrund stammen, wobei die Bohrlochdaten für jede aktuelle Kote von mehreren Koten eine Verknüpfung zwischen der aktuellen Kote und einer Fazies von mehreren Fazies aufweisen,
wobei das Verfahren aufweist:
- Empfangen (401) der Bohrlochdaten (101);
**dadurch gekennzeichnet, dass** es ferner aufweist:
- Empfangen (402a, 402b, 402c), für jede aktuelle Fazies (F1, F2, F3) der mehreren Fazies, einer Wahrscheinlichkeitsverteilung (102_F1, 102_F2, 102_F3) eines Vorhandenseins der aktuellen Fazies als Funktion eines die Sedimentation beeinflussenden Parameters;
- für jede aktuelle Kote (z₁₀-z₂₀) der mehreren Koten und in einem Raum, der mindestens eine erste Achse und eine zweite Achse aufweist:
- Bestimmen (405) mindestens eines Punkts (103a-103f, 104a, 105a, 106a-106f; 107a-107j) in dem Raum, wobei der mindestens eine Punkt als Koordinate gemäß der ersten Achse die aktuelle Kote hat und als Koordinate gemäß der zweiten Achse eine Koordinate hat, die abhängig ist von der Wahrscheinlichkeitsverteilung des Vorhandenseins der Fazies, die in den empfangenen Bohrlochdaten mit der aktuellen Kote verknüpft ist;
- Bestimmen (408) einer Kurve (108) in dem Raum als Funktion des mindestens einen Punkts für jede Kote der mehreren Koten.

2. Verfahren nach Anspruch 1, in welchem der die Sedimentation beeinflussende Parameter ein Parameter in einer Gruppe ist, die einen Abstand zu dem Bohrloch, eine Sedimentationsenergie, eine Wassertiefe bei der Sedimentation aufweist.

3. Verfahren nach einem der vorstehenden Ansprüche, in welchem der mindestens eine bestimmte Punkt (406) mit einem Gewicht (w₂₀₃-w₂₀₈) verknüpft wird, wobei das Gewicht eine Funktion der Wahrscheinlichkeitsverteilung des Vorhandenseins der Fazies, die in den empfangenen Bohrlochdaten mit der aktuellen Kote verknüpft ist,
und in welchem die Bestimmung der Kurve abhängig von dem mindestens einen Gewicht ist, das mit dem mindestens einen Punkt verknüpft ist.

4. Verfahren nach einem der vorstehenden Ansprüche, in welchem die Bestimmung der Kurve eine polynomische Regression oder eine lineare Regression oder eine multilineare Regression oder eine Savitzky-Golay-Methode aufweist.

5. Verfahren nach einem der vorstehenden Ansprüche, in welchem die Bestimmung der Kurve die Minimierung eines Abstands aufweist, wobei der minimierte Abstand eine Operation in der folgenden Gruppe aufweist:
- eine Summe von Abständen zwischen der bestimmten Kurve und dem mindestens einen bestimmten Punkt;
- eine Summe von Abstandsquadraten zwischen der bestimmten Kurve und dem mindestens einen bestimmten Punkt;
- eine Summe von Abständen der Potenz N zwischen der bestimmten Kurve und dem mindestens einen bestimmten Punkt, wobei N eine ganze Zahl größer oder gleich 3 ist.

6. Verfahren nach Anspruch 3, in welchem die Bestimmung der Kurve die Minimierung eines Abstands aufweist, wobei der minimierte Abstand eine Operation in der folgenden Gruppe aufweist:
- eine gewichtete Summe von Abständen zwischen der bestimmten Kurve und dem mindestens einen bestimmten Punkt, wobei die Gewichtung abhängig von den Gewichten ist, die mit den bestimmten Punkten verknüpft sind;
- eine gewichtete Summe von Abstandsquadraten zwischen der bestimmten Kurve und dem mindestens einen bestimmten Punkt, wobei die Gewichtung abhängig von den Gewichten ist, die mit den bestimmten Punkten verknüpft sind;
- eine gewichtete Summe von Abständen der Potenz N zwischen der bestimmten Kurve und dem mindestens einen bestimmten Punkt, wobei N eine ganze Zahl größer oder gleich 3 ist, und die Gewichtung abhängig von den Gewichten ist, die mit den bestimmten Punkten verknüpft sind.

7. Verfahren nach Anspruch 3, in welchem der mindestens eine Punkt mehrere Punkte aufweist, wobei das Verfahren ferner aufweist:
- für mindestens eine aktuelle Kote, Normalisierung (407) der Gewichte der Punkte der mehreren Punkte, die als Koordinate gemäß der ersten Achse die aktuelle Kote haben.

8. Verfahren nach einem der vorstehenden Ansprüche, in welchem das Verfahren ferner aufweist:
- Bestimmen (410) einer mit einer gegebenen Kote verknüpften Fazies, wobei die Bestimmung abhängig ist von dem Wert der für die gegebene Kote bestimmten Kurve und den empfangenen Wahrscheinlichkeitsverteilungen.

9. Vorrichtung zur Verarbeitung von Bohrlochdaten, die von einem Bohrloch in einem geologischen Untergrund stammen, wobei die Bohrlochdaten für jede aktuelle Kote von mehreren Koten eine Verknüpfung zwischen der aktuellen Kote und einer Fazies von mehreren Fazies aufweisen,
wobei die Vorrichtung (500) aufweist:
- eine Schnittstelle (503) zum Empfangen der Bohrlochdaten;
**dadurch gekennzeichnet, dass** sie ferner aufweist:
- eine Schnittstelle (503) zum Empfangen - für jede aktuelle Fazies der mehreren Fazies - einer Wahrscheinlichkeitsverteilung eines Vorhandenseins der aktuellen Fazies als Funktion eines die Sedimentation beeinflussenden Parameters;
- für jede aktuelle Kote der mehreren Koten und in einem Raum, der mindestens eine erste Achse und eine zweite Achse aufweist:
- eine Schaltung (504), die eingerichtet ist, mindestens einen Punkt in dem Raum zu bestimmen, wobei der mindestens eine Punkt als Koordinate gemäß der ersten Achse die aktuelle Kote hat und als Koordinate gemäß der zweiten Achse eine Koordinate hat, die abhängig ist von der Wahrscheinlichkeitsverteilung des Vorhandenseins der Fazies, die in den empfangenen Bohrlochdaten mit der aktuellen Kote verknüpft ist;
- eine Schaltung (504), die eingerichtet ist, eine Kurve in dem Raum als Funktion des mindestens einen Punkts für jede Kote der mehreren Koten zu bestimmen.

10. Informatikprogrammprodukt aufweisend Befehle zum Durchführen des Verfahrens nach einem der Ansprüche 1 bis 8, wenn dieses Programm von einem Prozessor ausgeführt wird.

## Claims

1. Computer-implemented method for processing well data from a well in a geological subsurface, the well data comprising, for each current spot height from a plurality of spot heights, an association between said current spot height and a facies from a plurality of facies. wherein the method comprises:
- receiving (401) well data (101);
**characterized in that** it further comprises:
- receiving (402a, 402b, 402c), for each current facies (F1, F2, F3) of the plurality of facies, a presence probability distribution (102_F1, 102_F2, 102_F3) of said current facies, depending on a parameter influencing sedimentation;
- for each current spot height (z₁₀-z₂₀) of the plurality of spot heights, and in a space comprising at least one first axis and a second axis:
-- determining (405) at least one point (103a-103f, 104a, 105a, 106a-106f, 107a-107j) in said space, said at least one point having as a coordinate along the first axis said current spot height and as a coordinate along the second axis a coordinate depending on the presence probability distribution of the facies associated with said current spot height in said received well data;
- determining (408) a curve (108) in said space depending on said at least one point for each spot height of the plurality of spot heights.

2. Method according to claim 1, wherein the parameter influencing sedimentation is a parameter in a group comprising a distance to the well, a sedimentation energy and a water depth during sedimentation.

3. Method according to one of the preceding claims, wherein the at least one determined point (406) is associated with a weight (w₂₀₃-w₂₀₈), said weight depending on the presence probability distribution of the facies associated with said current spot height in said received well data,
and wherein, the determination of said curve depends on said at least one weight associated with said at least one point.

4. Method according to one of the preceding claims, wherein the determination of said curve comprises polynomial regression or linear regression or multiple linear regression or a Savitzky-Golay method.

5. Method according to one of the preceding claims, wherein the determination of said curve comprises minimising a distance, said minimised distance comprising an operation in a group comprising:
- a sum of distances between the determined curve and the at least one determined point;
- a sum of squares of distances between the determined curve and the at least one determined point;
- a sum of distances to the power N between the determined curved and the at least one determined point, N being an integer greater than or equal to 3;

6. Method according to claim 3, wherein the determination of said curve comprises minimising a distance, said minimised distance comprising an operation in a group comprising:
- a weighted sum of distances between the determined curve and the at least one determined point, the weighting depending on the weights associated with the determined points.
- a weighted sum of squares of distances between the determined curve and the at least one determined point, the weighting depending on the weights associated with the determined points.
- a weighted sum of distances to the power N between the determined curve and the at least one determined point, N being an integer greater than or equal to 3, the weighting depending on the weights associated with the determined points.

7. Method according to claim 3, wherein the method further comprises:
- for at least one current spot height, normalising (407) the weights of the points having as a coordinate along the first axis said current spot height.

8. Method according to one of the preceding claims, wherein the method further comprises:
- determining (410) a facies associated with a given spot height, said determination depending on the value of the curve determined for said given spot height, and the received probability distributions.

9. A device for processing well data from a well in a geological subsurface, the well data comprising, for each current spot height from a plurality of spot heights, an association between said current spot height and a facies from a plurality of facies.
wherein the device (500) comprises:
- an interface (503) for receiving well data;
**characterized in that** it further comprises:
- an interface (503) for receiving, for each current facies of the plurality of facies, a presence probability distribution of said current facies, depending on a parameter influencing sedimentation;
- for each current spot height of the plurality of spot heights, and in a space comprising at least one first axis and a second axis:
-- a circuit (504) for determining at least one point in said space, said at least one point having as a coordinate along the first axis said current spot height and as a coordinate along the second axis a coordinate depending on the presence probability distribution of the facies associated with said current spot height in said received well data;
- a circuit (504) for determining a curve in said space depending on said at least one point for each spot height of the plurality of spot heights.

10. A computer program product comprising instructions for implementing the method according to one of claims 1 to 8, when said program is run by a processor.
